# EUROPÄISCHE PATENTSCHRIFT

(11) **EP 0 598 220 B1**
(45) Veröffentlichungstag und Bekanntmachung des Hinweises auf die Patenterteilung: **06.12.1995**
(21) Anmeldenummer: 93116623.5
(22) Anmeldetag: 14.10.1993
(51) Int. Cl.: H01M 2/10

(54) **Thermisch isolierende Batterieabdeckung**
Thermally insulating covering for battery
Couverture thermo-isolante pour batterie

(30) Priorität: 17.11.1992 DE 9215671 U
(43) Veröffentlichungstag der Anmeldung: 25.05.1994
(73) Patentinhaber: ODENWALD CHEMIE GmbH, 69246 Schönau/Heidelberg (DE)
(72) Erfinder: Weiss, Edgar, D-69239 Neckarsteinach (DE); Augele, Hans-Peter, D-69118 Heidelberg (DE); Bellemann, Rudolf, D-68789 St. Leon-Rot (DE); Stoll, Werner, D-69239 Neckarsteinach (DE)
(74) Vertreter: Müller, Hans-Jürgen, Dipl.-Ing.

(56) Entgegenhaltungen:
- DE-A- 3 932 291
- DE-U- 8 704 462
- GB-A- 400 907
- GB-A- 890 954
- GB-A- 2 213 981
- US-A- 2 303 796
- US-A- 2 579 518
- US-A- 4 255 502

## Beschreibung

Die Erfindung betrifft eine thermisch isolierende Batterieabdeckungen der im Oberbegriff des Anspruchs 1 genannten Gattung.

Derartige Batterieabdeckungen sind bereits bekannt. Dabei ist die Innenschicht beispielsweise aus Polyurethanschaum gebildet und von zwei aus Polyvinylchlorid bestehenden Außenschichten umhüllt, wodurch sich ein Laminat dieser drei Schichten ergibt. Die gegenüber verhältnismäßig dünnen Außenschichten um ein mehrfaches dickere Innenschicht sorgt einerseits wegen der eingeschlossenen Hohlräume für verhältnismäßig gute thermisch isolierende Eigenschaften, verleiht aber auch der Batterieabdekkung eine gewisse Steifigkeit. Damit die Batterieabdeckung dennoch an den Kanten der Batterie gut an die Batterieaußenwände angelegt werden kann, ist es auch bekannt, das Laminat der Batterieabdeckung längs dieser Batterieaußenkante hinsichtlich der Materialdicke insbesondere der Schaum-Innenschicht zu vermindern. Dies geschieht beispielsweise durch Anwendung von Druck und Wärme: hierdurch werden linienförmige Sicken in das Laminat eingebracht, welche sogenannte "Faltlinien" bilden, längs welcher die Steifigkeit des Laminats weitgehend vermindert ist, so daß dort die durch solche Faltlinien voneinander getrennten Flächenteile bzw. Wandfelder der Batterieabdeckung in bezug zueinander leicht faltbar bzw. biegbar sind.

Beim Umhüllen der Batterie wird die aus solchen zusammenhängenden Flächenteilen gebildete Batterieabdeckung an die einzelnen Außenwände der Batterie so angelegt, daß sich Randteile der Batterieabdeckung überlappen. In diesem Überlappungsbereich befinden sich Verbindungselemente, so daß die sich überlappenden Batterieabdeckungsteile verbunden werden können und eine im wesentlichen geschlossene Batterieumhüllung bilden, ohne daß sich Randteile hochstellen. Dabei ist es bekannt, metallische Druckknöpfe als Verbindungselemente zu verwenden. Auch Nieten aus Metall oder anderen Kunststoffen werden als Verbindungselemente verwendet; diese haben jedoch den Nachteil, daß die Batterieabdeckung dann nicht ohne weiteres wieder geöffnet und für andere Batterien verwendet werden kann, was bei der Anwendung von Druckknöpfen für die Verbindungselemente dagegen möglich ist.

Der Erfindung liegt die Aufgabe zugrunde eine solche Batterieabdeckung dahingehend zu verbessern, daß nicht nur deren Wiederverwendbarkeit als Batterieabdeckung selbst (durch Anwendung bei anderen Batterien), sondern auch deren Recyclingsfähigkeit trotz einfacher Herstellbarkeit und passabler Handhabung gewährleistet ist.

Im Anspruch 1 ist die Erfindung gekennzeichnet und in Unteransprüchen sind bevorzugte Ausbildungsformen der Erfindung beansprucht. Darüber hinaus werden auch anhand der Zeichnung in der Figurenbeschreibung weitere bevorzugte Ausbildungsformen erläutert.

Bei der erfindungsgemäßen Batterieabdeckung werden "arteigene" Materialien sowohl für die einzelnen Schichten des Laminats als auch für die Verbindungselemente verwendet. Besonders bevorzugt wird Polyester-Material, das nicht nur in Form von Folien, sondern auch unter Verwendung von Polyesterfasern in Form von watteähnlichen Vliesen aber auch als unter Verwendung von Fäden hergestelltes Gewebe Anwendung finden kann. Hierdurch kann den Anforderungen an die physikalischen technischen Eigenschaften der einzelnen Schichten gut Rechnung getragen werden, ohne daß beim Recycling bzw. Entsorgen eine Trennung einzelner Schichten erforderlich ist, was das Recyclen sehr verteuern würde. Darüber hinaus ist auch ein technisch aufwendiges Abtrennen metallischer Verbindungselemente aus dem Laminat überflüssig. Laminate solcher Art sind an sich bereits bekannt (EP-O-0 469 309), deren Anwendbarkeit für den vorliegenden Zweck zur thermischen Isolierung von Batterien wurde jedoch noch nicht erkannt und nicht daran gedacht, auch die Verbindungselemente selbst aus diesem Material herzustellen.

Dabei vermeidet die erfindungsgemäße Lösung der Art der Ausbildung der Verbindungslemente auch ein umständliches Herstellungsverfahren: so ist es nicht erforderlich, separat Druckknöpfe aus dem gleichen Basismaterial, insbesondere Polyester vorzufabrizieren, um diese dann in Löchern des Abdekkungslaminats zu verankern. Vielmehr reicht es bei der Erfindung aus, das Laminat an den betreffenden Stellen lediglich der Art der schlitzförmigen Durchbrechungen bzw. Stecklappen. entsprechend insbesondere durch Stanzen zu durchtrennen, um auf schnelle und einfache Weise die Batterieabdeckung zu produzieren. Entsprechend ist die Verwendung von Klettverschlüssen möglich.

Gleichzeitig kann hierdurch den geforderten engen Toleranzen Rechnung getragen werden, was beim separaten Anfertigen und Einsetzen von beispielsweise Druckknöpfen nicht möglich ist.

Insofern erfüllt die Erfindung mehrere technische Teilaufgaben. Mit anderen Worten: die gemeinsame Anwendung der im Kennzeichenteil des Anspruchs 1 genannten Merkmale ergibt eine funktionelle Verschmelzung derselben zur Lösung der oben genannten Aufgaben.

Ausführungsbeispiele der Erfindung werden nun anhand der Zeichnung näher erläutert. Darbei zeigen:
- Fig. 1: eine schematische Aufsicht auf die eine Batterie umhüllende Batterieabdeckung in dem Zustand, in dem die oberen Abdeckungsteile noch nicht aufeinandergelegt und miteinander verbunden sind;
- Fig. 2: einen vergrößerten schematischen Querschnitt durch das Laminat der Batterieabdeckung im Bereich einer Faltlinie;
- Fig. 3: eine schematische Aufsicht auf den Bereich der Batterieabdeckung, in dem sich ein pilzförmiger Stecklappen befindet;
- Fig. 4/5: schematische Aufsichten auf zwei verschiedene Arten schlitzförmiger Durchbrechungen und
- Fig. 6: eine schematische Aufsicht auf einen Teil der Batterieabdeckung in demjenigen Zustand, in dem zwei Flächenteile derselben übereinandergelegt und mittels des in Fig. 6 gezeigten Paares von Verbindungselementen verbunden ist

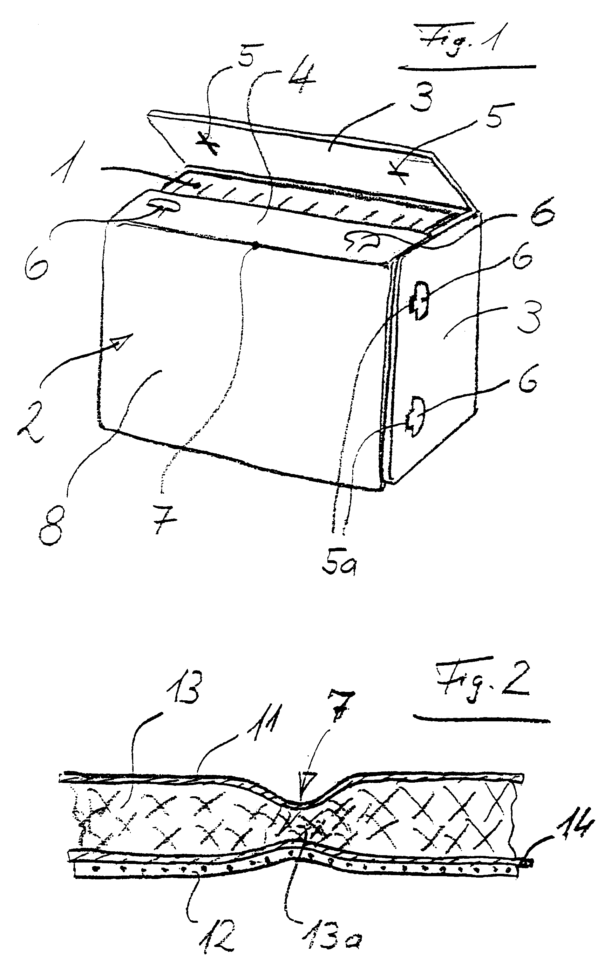

Die Batterie 1 ist nach Fig. 1 im wesentlichen vollständig durch die Batterieabdeckung 2 umgeben; lediglich die Oberseite der Batterie 1 ist hier nur teilweise durch das Rand-Wandteil bzw. Flächenteil 4 überdeckt, während das andere Rand-Wandfeld bzw. Flächenteil 3 noch nach oben absteht, um erst anschließend auf das erstgenannte Flächenteil 4 herabgedrückt und dort mit diesem verbunden zu werden. Dagegen ist das seitliche Flächenteil 3 bereits auf ein hier nicht sichtbares anderes Flächenteil aufgelegt worden, von dem die nach ihren äußeren Konturen etwa pilzartigen Stecklappen 6 durch schlitzförmige Durchbrechungen 5 des Flächenteils 3 hindurchgesteckt sind, so daß die mit dem betreffenden Flächenteil verbundenen Füße der pilzförmigen Stecklappen 6 von den querverlaufenden kürzeren linienförmigen Schlitzen 5a (siehe insbesondere Fig. 5) aufgenommen sind. Der obere Flächenteil 4 ist bezüglich des Frontflächenteils 8 der Batterieabdeckung 2 längs der Faltlinie 7 biegbar, sonst aber mit Ausnahme der biegbaren Stecklappen 6 im wesentlichen steif.

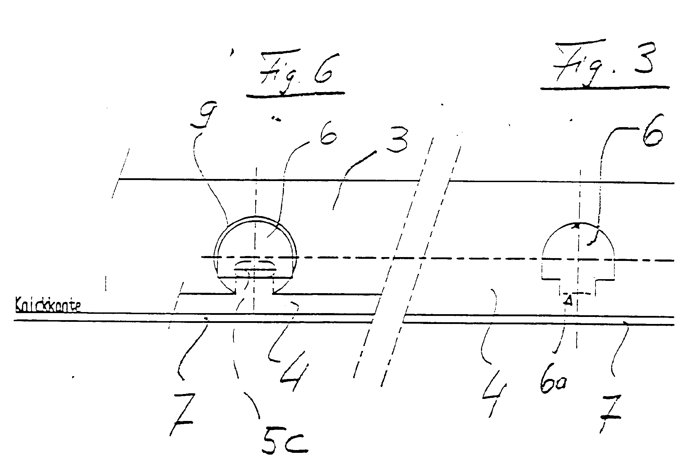

Die Steifigkeit des Laminats wird nach dem Beispiel der Figur 2 insbesondere durch die Innenschicht 13 gebildet, die von den Außenschichten 11 und 12 und darüber hinaus noch von einer Zwischenschicht 14 eingehüllt ist. Die Innenschicht 13 besteht aus einer beispielsweise zwei Zentimeter dicken Vliesmatte aus Polyesterfäden, zwischen denen Hohlräume gebildet sind. Diese Vliesmatte ist watteähnlich. Während die der Batterie 1 zugewandte Außenschicht 11 aus Polyesterfolie besteht, ist die der Außenseite zugewandte Außenschicht 12 aus einem Gewebe gebildet, dessen Fäden aus Polyester bestehen. Dieses Gewebe verleiht der Außenschicht 12 der Batterieabdeckung einerseits gute mechanische Eigenschaften, andererseits aber auch die Möglichkeit einer besseren Reinhaltung und Reinigung. Zwischen der Außenschicht 12 und der Innenschicht 13 ist eine Zwischenschicht 14 aus einer thermisch insbesondere durch Hochfrequenzenergie schweißbaren Folie ebenfalls aus Polyester eingelegt. An der der Faltlinie 7 von Fig. 1 entsprechenden Stelle ist die Materialdicke des Laminats wesentlich vermindert in Form einer Sicke. Entsprechend ist dort das Fasermaterial des Vlieses im Bereich 13a verdichtet, so daß dort sowohl die Biegbarkeit verbessert, als auch die Reißfähigkeit erhöht ist.

Gemäß Fig. 3 ist in dem an die Faltlinie 7 anschließenden Randwandfeld, d.h. dem Flächenteil 4, eine pilzähnliche Kontur eingestanzt, so daß der Stecklappen 6 um die Fußlinie 6a hochbiegbar ist, längs der der Stecklappen 6 ungestanzt mit dem Flächenteil 4 in Verbindung bleibt.

Anstelle der schlitzförmigen (als Kreuz angeordneten) Durchbrechungen 5 und der pilzförmigen Stecklappen 6 sind Klettverschlüsse anwendbar, bei denen die Fäden insb. Polyesterfäden sind.

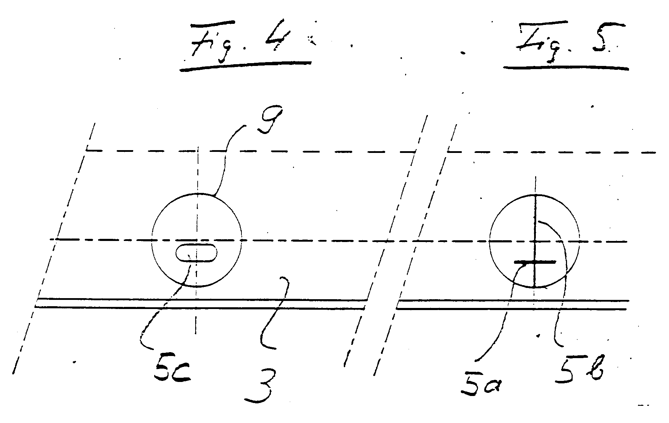

Bei dem Ausführungsbeispiels nach Fig. 4 ist die schlitzförmige Durchbrechung als ovales Loch 5c ausgebildet und innerhalb hier kreisförmigen Bereiches 9 des Flächenteils 3 angeordnet, in dem nach dem Einstecken des pilzförmigen Stecklappens 6, dessen Kopf dort seine Position findet. Damit dieser Stecklappen 6 gemäß Fig. 6 nicht wesentlich über den Wandteil 3 nach dem Einstecken hervorsteht, empfiehlt es sich, den Flächenteil 3 in dem kreisförmigen Bereich 9 hinsichtlich der Materialdicke zu vermindern.

Gemäß Fig. 5 ist die schlitzförmige Durchbrechung in Form eines Kreuzschlitzes ausgebildet, von dem sich eine kürzere linienförmige Durchbrechung 5a unter etwa rechtem Winkel zu einer längeren schlitzförmigen Durchbrechung 5b hinzieht. Beim Einstecken des Stecklappens 6 erleichtert die längere schlitzförmige Druchbrechung 5b das Hindurchstecken, während anschließend nur noch die kürzere schlitzförmige Durchbrechung 5a zur Aufnahme des Fußes des pilzförmigen Stecklappesn 6 dient, so daß dieser nicht mehr ohne weiters durch die Durchbrechung 5a hindurchziehbar ist.

Es hat sich gezeigt, daß sich die Verwendung von Polyester als Basismaterial für alle Teile des Laminats der Batterieabdeckung besonders bewährt, und zwar sowohl hinsichtlich der chemischen Beständigkeit gegenüber der Batteriesäure als auch hinsichtlich der Eigenschaft, nur schwer entflammbar zu sein, wodurch eine höhere thermische Belastbarkeit möglich ist.

## Patentansprüche

1. Thermisch isolierende Batterieabdeckung bestehend aus einem Laminat von zumindest vorwiegend aus Kunststoff bestehenden Schichten, von denen thermoplastische Außenschichten mindestens eine vergleichsweise dickere, Hohlräume aufweisende Innenschicht umgeben und miteinander und/oder mit der Innenschicht insbesondere thermisch verschweißt sind, bei der Flächenteile der Abdeckung durch Faltlinien voneinander getrennt sind, welche insbesondere durch Sicken gebildete, insbesondere linienförmige Verminderungen der Materialdicke des Laminats darstellen, und bei der Flächenteile insb. Paare von Verbindungselementen aufweisen, mit denen nach dem jedenfalls teilweisen Um- oder Einhüllen der Batterie sich überlappende Flächenteile miteinander lösbar verbindbar sind,
**dadurch gekennzeichnet**,
daß die Innenschicht (13) und die Außenschichten (11, 12) aus demselben Basismaterial gebildet sind, und daß die einen Verbindungselemente der insb. Paare von Verbindungselementen als schlitzförmige Durchbrechungen (5) im betreffenden Flächenteil (3) und die anderen Verbindungselemente der betreffenden insb. Paare von Verbindungselemente als durch die schlitzförmigen Durchbrechungen (5) durchsteckbare, hinter diesen aber verankerbare Stecklappen (6) der die betreffenden Flächenteile (3) unter- bzw. überlappenden Flächenteile (4) gebildet sind.

2. Batterieabdeckung nach Anspruch 1,
**dadurch gekennzeichnet**,
daß die Innenschicht (13) aus einem Faservlies und mindestens eine Außenschicht (11) aus einer Folie aus dem betreffenden Basismaterial bestehen.

3. Batterieabdeckung nach Anspruch 1 oder 2,
**dadurch gekennzeichnet**,
daß eine Außenschicht (12) aus einem Gewebe aus dem betreffenden Basismaterial besteht.

4. Batterieabdeckung nach Anspruch 3,
**dadurch gekennzeichnet**,
daß zwischen die aus Gewebe bestehende Außenschicht (12) und die aus Faservlies bestehende Innenschicht (3) eine thermoplastische Schweißfolie als Zwischenschicht (14) eingefügt ist.

5. Batterieabdeckung nach einem der vorhergehenden Ansprüche,
**dadurch gekennzeichnet**,
daß die Innenschicht (13) und die Außenschichten (11, 12) aus Polyester bestehen.

6. Batterieabdeckung nach einem der vorhergehenden Ansprüche,
**dadurch gekennzeichnet**,
daß die Stecklappen (6) eine pilzförmige Außenkontur aufweisen, die durch Ausstanzen aus dem betreffenden Flächenteil (4) mit Ausnahme des Fußes des Stecklappens (6) gebildet ist.

7. Batterieabdeckung nach einem der vorhergehenden Ansprüche,
**dadurch gekennzeichnet**,
daß Stecklappen (6) Materialverdickungen als Verankerungsteile aufweisen.

8. Batterieabdeckung nach einem der vorhergehenden Ansprüche,
**dadurch gekennzeichnet**,
daß schlitzförmige Durchbrechungen als ovale Löcher (5c) im betreffenden Flächenteil (3) ausgebildet sind.

9. Batterieabdeckung nach einem der vorhergehenden Ansprüche,
**dadurch gekennzeichnet**,
daß schlitzförmige Durchbrechungen (5) als gestanzte Kreuzschlitze mit einer langen linienförmigen Durchbrechung (5b) und mit einer demgegenüber kurzen und unter etwa rechtem Winkel verlaufenden linienförmigen Durchbrechung (5a) ausgebildet sind.

10. Batterieabdeckung nach Anspruch 9,
**dadurch gekennzeichnet**,
daß die kürzere linienförmige Durchbrechung (5a) quer zu der Richtung angeordnet ist, in der zum Öffnen der Batterieabdeckung sich entfaltende Zugkräfte in dem die Batterie (1) umhüllten Zustand der Batterieabdeckung (2) auftreten.

11. Batterieabdeckung nach einem der Ansprüche 1 - 5,
**dadurch gekennzeichnet**,
daß Stecklappen und Durchbrechungen nach Art von einen Klettverschluß bildenden Organen ausgebildet sind.

## Claims

1. Thermally insulating battery cover comprising a laminate made up of layers of at least predominantly plastics material, thermoplastic outer layers of which enclose a comparatively thicker inner layer having voids therein and the layers being welded, especially heat-sealed, to one another and/or to the inner layer, in which sheet members of the cover are separated by folding lines which constitute especially line-shaped reductions of the material thickness of the laminate formed especially by creasing, and in which sheet members include especially pairs of connecting elements by means of which, subsequent to the at least partial wrapping or covering of the battery, overlapping sheet portions can be detachably connected to each other, characterized in
that the inner layer (13) and the outer layers (11, 12) are made from the same base material, and that the one connecting elements of the especially pairs of connecting elements are formed as slit-like cuts (5) in the respective sheet member (3) while the other connecting elements of the especially pairs of respective connecting elements are formed as push-in lips (6) of the sheet members (4) adapted to be pushed through said slit-like cuts and anchored beneath the same, said sheet members (4) underlying or overlapping the respective sheet members (3).

2. Battery cover as claimed in claim 1,
characterized in
that the inner layer (13) consists of a non-woven, and at least one outer layer (11) consists of a sheet made of the respective base material.

3. Battery cover as claimed in claim 1,
characterized in
that an outer layer (12) is made from a fabric of the respective base material.

4. Battery cover as claimed in claim 3,
characterized in
that a sealable thermoplastic sheet is sandwiched as an intermediate layer (14) between the outer layer (12) made from a fabric and the inner layer (3) made from a non-woven.

5. Battery cover as claimed in any of the preceding claims,
characterized in
that the inner layer (13) and the outer layers (11, 12) are made from polyester.

6. Battery cover as claimed in any of the preceding claims,
characterized in
that the push-in lips (6) have a mushroom-like outer contour formed by stamping from the respective sheet member (4) except for the foot of the push-in lip (6).

7. Battery cover as claimed in any of the preceding claims,
characterized in
that push-in lips (6) comprise thickened material portions as anchoring parts.

8. Battery cover as claimed in any of the preceding claims,
characterized in
that slit-like cuts are formed as oval holes (5c) in the respective sheet member (3).

9. Battery cover as claimed in any of the preceding claims,
characterized in
that slit-like cuts (5) are formed as stamped cross-slits comprising a long line-shaped cut (5b) and a relatively short line-shaped cut (5a) approximately at right angles to the former.

10. Battery cover as claimed in claim 9,
characterized in
that the shorter line-shaped cut (5a) is disposed transversely to the direction in which tensile forces will develop in the battery (1) covering state of the battery cover (2) when said cover is to be opened.

11. Battery cover as claimed in any of the claims 1 to 5,
characterized in
that push-in lips and cuts are designed as members forming a Velcro fastening means.

## Revendications

1. Couverture de batterie thermo-isolante constituée d'un stratifié de couches au moins principalement en matière plastique, dont les couches extérieures thermoplastiques entourent au moins une couche intérieure relativement plus épaisse, présentant des cavités et sont soudées en particulier thermiquement entre elles et/ou avec la couche intérieure, dans laquelle des parties de surface de la couverture sont séparées les unes des autres par des lignes de pliage, qui constituent des réductions en particulier en forme de lignes de l'épaisseur de la matière du stratifié, formées en particulier par des moulures, et dans laquelle des parties de surface présentent en particulier des paires d'éléments de liaison, avec lesquels des parties de surface se recouvrant peuvent être assemblées entre elles de manière amovible, après enveloppement en tout cas partiel de la batterie,
caractérisée
en ce que la couche intérieure (13) et les couches extérieures (11, 12) sont formées dans le même matériau de base, et en ce que certains éléments de liaison des paires en particulier d'éléments de liaison sont formés en tant qu'ajours (5) en forme de fentes dans la partie de surface (3) concernée et les autres éléments de liaison des paires concernées des éléments de liaison sont formés en tant que pattes d'insertion (6) à faire passer à travers les ajours (5) en forme de fentes, mais pouvant être ancrés derrière ceux-ci, des parties de surface (4) passant sous ou sur les parties de surface (3) concernées.

2. Couverture de batterie selon la revendication 1,
caractérisée
en ce que la couche intérieure (13) est constituée d'un non-tissé et au moins une couche extérieure (11) est constituée d'une feuille du matériau de base concerné.

3. Couverture de batterie selon les revendications 1 ou 2,
caractérisée
en ce qu'une couche extérieure (12) est faite d'un tissu du matériau de base concerné.

4. Couverture de batterie selon la revendication 3,
caractérisée
en ce qu'entre la couche extérieure (12) en tissu et la couche intérieure (3) en non-tissé, est insérée une feuille soudée thermoplastique en tant que couche intermédiaire (14).

5. Couverture de batterie selon l'une des revendications précédentes,
caractérisée
en ce que la couche intérieure (13) et les couches extérieures (11, 12) sont en polyester.

6. Couverture de batterie selon l'une des revendications précédentes,
caractérisée
en ce que les pattes d'insertion (6) présentent un contour extérieur en forme de champignon, qui est formé découpé dans la partie de surface (4) concernée, à l'exception du pied de la patte d'insertion (6).

7. Couverture de batterie selon l'une des revendications précédentes
caractérisée
en ce que des pattes d'insertion (6) présentent des surépaisseurs de matière en tant qu'éléments d'ancrage.

8. Couverture de batterie selon l'une des revendications précédentes,
caractérisée
en ce que des ajours en forme de fentes sont formés en tant que trous ovales (5c) dans la partie de surface (3) concernée.

9. Couverture de batterie selon l'une des revendications précédentes,
caractérisée
en ce que des ajours (5) en forme de fentes sont formés en tant que fentes en croix découpées avec un long ajour (5) en forme de ligne et avec un ajour (5a) en forme de ligne, court par rapport au premier et s'étendant sous un angle à peu près droit.

10. Couverture de batterie selon la revendication 9,
caractérisée
en ce que l'ajour (5a) en forme de ligne plus court est disposé transversalement à la direction dans laquelle les forces de traction s'exerçant pour l'ouverture de la couverture de batterie, se produisent dans l'état de la couverture de batterie (2) enveloppant la batterie (1).

11. Couverture de batterie selon l'une des revendications 1 à 5,
caractérisée
en ce que des pattes d'insertion et des ajours sont réalisés à la manière d'organes formant une fermeture à accrochage.
